# FASCICULE DE BREVET EUROPEEN

(11) **EP 0 438 348 B1**
(45) Date de publication et mention de la délivrance du brevet: **21.06.1995**
(21) Numéro de dépôt: 91400084.9
(22) Date de dépôt: 16.01.1991
(51) Int. Cl.: H04N 1/00

(54) **Appareil de bureau pour traiter des documents et pourvu d'un coupe-papier**
Vorlagenverarbeitungsbürogerät versehen mit einem Papierschneider
Document processing office apparatus provided with a paper cutter

(30) Priorité: 17.01.1990 FR 9000482
(43) Date de publication de la demande: 24.07.1991
(73) Titulaire: SOCIETE D'APPLICATIONS GENERALES D'ELECTRICITE ET DE MECANIQUE S A G E M, F-75783 Paris Cedex 16 (FR)
(72) Inventeur: Kuhn,Alex, F-95430 Auvers s/ Oise (FR)
(74) Mandataire: Bloch, Gérard

(56) Documents cités:
- DE-A- 3 837 877
- GB-A- 678 411
- US-A- 4 866 531
- PATENT ABSTRACTS OF JAPAN vol. 8, no. 235 (E-275)(1672) 27 octobre 1984,& JP-A-59 114965 (SANYO DENKI) 03 juillet 1984,
- PATENT ABSTRACTS OF JAPAN vol. 8, no. 115 (E-247)(1552) 29 mai 1984,& JP-A-59 28755 (SANYO DENKI) 15 février 1984,

## Description

La présente invention concerne un appareil de bureau comprenant un dispositif de traitement de documents, entraînable pour déplacer l'un par rapport à l'autre un document traité et une tête de traitement, et un dispositif de coupe, entraînable pour couper des documents dans une bande de papier, un unique moteur étant prévu pour l'entraînement du dispositif de traitement et du dispositif de coupe, avec des moyens d'aiguillage, commandables par le sens de rotation du moteur, pour transmettre la force motrice du moteur soit vers le dispositif de traitement soit vers le dispositif de coupe.

L'invention s'applique notamment aux appareils de télécopie, ou télécopieurs, qui comprennent en général deux dispositifs de traitement de documents, l'un pour analyser les documents dont le contenu est à émettre à distance et l'autre pour imprimer les documents reçus, et un dispositif coupe-papier pour couper, dans une bande de papier, les documents reçus et imprimés à délivrer à l'utilisateur de l'appareil. L'invention peut également s'appliquer à d'autres appareils comme des photocopieurs.

Tous les appareils de bureau de ce genre, qui ont déjà été proposés, à moteur unique, sont mécaniquement complexes, peu robustes et pas forcément fiables. lls mettent en oeuvre des cliquets, des ressorts ou des roues libres, comme par exemple l'appareil de Patent Abstracts of Japan, vol. 8, n° 235 (E-275) (1672) 27 octobre 1984, JP-A-59 11 4965 (Sanyo Denki), qui peuvent faire naître des couples résiduels.

La présente invention vise à pallier ces inconvénients.

A cet effet, la présente invention a pour objet un appareil du type défini ci-dessus, caractérisé par le fait que lesdits moyens d'aiguillage comprennent une roue montée sur un bras qui pivote librement autour de l'arbre de sortie dudit moteur, ladite roue étant entraînée en rotation par ledit arbre de sortie et coopérant soit avec une roue d'entraînement du dispositif de traitement, soit avec une roue d'entraînement du dispositif de coupe.

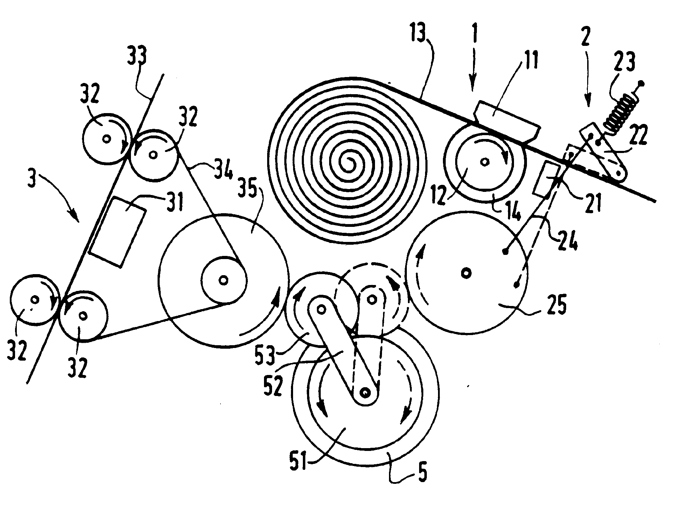

La présente invention sera mieux comprise à la lecture de la description suivante de la forme de réalisation préférée de l'appareil de bureau de l'invention, faite en se référant aux dessins annexés, sur lesquels l'unique figure représente, de façon schématique, un dispositif de traitement et de coupe d'un appareil conforme à l'invention.

L'appareil de bureau décrit ci-après est ici un télécopieur, pourvu, comme cela a déjà été indiqué, de deux dispositifs de traitement de documents, l'un pour analyser les documents dont le contenu est à émettre, l'autre pour imprimer les documents reçus sur une bande de papier, découpée après impression par un dispositif de coupe, pour délivrer chaque document reçu et imprimé à l'utilisateur du télécopieur.

Le dispositif d'analyse, et le dispositif d'impression doivent être entraînés mécaniquement pour le déplacement du document analysé ou imprimé devant une tête d'analyse ou d'impression, respectivement. En effet, la tête d'analyse, comme la tête d'impression, ne sont ici susceptibles de traiter qu'une ligne de pixels à la fois. Naturellement, le document à traiter pourrait rester immobile, la tête de traitement étant alors déplacée par rapport à celui-ci.

De même, le dispositif de coupe comporte une lame, ou couteau, mobile, et qui doit être entraînée mécaniquement.

Comme cela a déjà été signalé, l'invention est relative à l'entraînement mécanique des dispositifs précédents.

Sur la figure, il apparaît que le dispositif d'impression 1 comprend une tête d'impression 11 et un rouleau 12 d'entraînement d'une bande de papier 13 devant la tête d'impression 11. Ici, le rouleau 12 est entraîné par un moteur 14, il est tangent à la tête 11 le long de la zone active de celle-ci, et la bande de papier 13 est engagée entre le rouleau 12 et la tête 11.

Le dispositif de coupe 2 de la bande de papier 13 est disposé en aval du dispositif d'impression 1 sur le trajet de la bande 13. Il comprend une lame fixe 21 et une lame mobile 22. La lame mobile 22 est rappelée par un ressort 23 dans la position de la figure où elle est écartée de la lame fixe 21. La lame mobile 22 est reliée par une biellette 24 à une roue 25 de telle sorte que l'entraînement en rotation de la roue 25, dans le sens de la flèche en trait pointillé et sur une portion de tour, entraîne la lame mobile 22 vers la lame fixe 21, pour couper la bande 13, qui passe entre les deux lames 21 et 22.

Le dispositif d'analyse 3 comprend une tête d'analyse 31, et deux paires de rouleaux 32 d'entraînement du document analysé 33 devant la tête d'analyse 31. Ici, les paires de rouleaux 32 sont agencées comme des équipages de laminoirs et disposées de part et d'autre de la tête d'analyse 31. Les rouleaux 32 sont entraînés, par l'intermédiaire d'une courroie 34, par une roue 35.

Un moteur 5 entraîne une roue dentée 51 solidaire de son arbre de sortie. Dans un souci de simplicité, les dents de la roue 51 ainsi que celles des autres roues dentées ne sont pas représentées sur la figure. Sur l'arbre de sortie du moteur 5 est monté un bras 52, pivotant librement, et portant un arbre parallèle à celui du moteur, sur lequel est montée une roue dentée 53. La distance entre l'axe de l'arbre du moteur 5 et l'axe de l'arbre de la roue 53 est égale à la somme des rayons des roues 51 et 53, si bien que la roue 53 est entraînée en rotation par la roue 51 avec laquelle elle coopère, lorsque cette roue 51 est elle-même entraînée par le moteur 5.

Toutefois, du fait que le bras 52 pivote librement autour de l'arbre de sortie du moteur 5, et du fait des frottements, l'axe de la roue 53 est entraîné dans le sens de la rotation de la roue 51, tant que rien ne l'arrête.

C'est ainsi que lorsque le moteur 5 tourne dans le sens de la flèche en trait plein de la figure, qui est ici le sens trigonométrique, l'axe de la roue 53 se déplace dans le sens trigonométrique, jusqu'à ce que la roue 53 vienne coopérer avec la roue 35, qui comporte des dents à cet effet.

Si, par contre, le moteur 5 tourne dans le sens de la flèche en trait pointillé de la figure, qui est le sens horaire, l'axe de la roue 53 se déplace dans le sens horaire, jusqu'à ce que la roue 53 vienne coopérer avec la roue 25, qui comporte des dents à cet effet. Cette position est représentée en trait pointillé sur la figure.

Ainsi, si le moteur 5 tourne dans un sens, c'est le dispositif d'analyse 3 qui est entraîné, tandis que si le moteur 5 tourne dans l'autre sens, c'est le dispositif de coupe 2 qui est entraîné.

La roue 53 et le bras 52 agissent donc à la manière d'un aiguillage pour transmettre la force motrice du moteur 5 soit vers le dispositif d'analyse 3, soit vers le dispositif de coupe 2, l'aiguillage étant commandé par le sens de rotation du moteur 5.

Naturellement, il serait possible d'utiliser d'autres dispositifs pour aiguiller la force motrice du moteur 5, comme les dispositifs connus du type embrayage à ressort, ou roue libre. Toutefois ces dispositifs ont pour inconvénient de laisser subsister, sur l'organe au repos, un couple résiduel qui peut perturber le bon fonctionnement du dispositif de coupe ou du dispositif d'analyse.

Dans ce qui précède, le mot "roue dentée" est à prendre dans un sens très large, qui comprend notamment les roues dont l'épaisseur axiale est assez grande pour que la roue soit, en fait, un rouleau. En effet, pour simplifier certains problèmes mécaniques, il peut être utile d'employer de tels rouleaux, de dimension axiale sensiblement égale à la largeur des documents à traiter. Dans le cas où la roue 53 prend la forme d'un rouleau, il est prévu un bras analogue au bras 52 à chacune de ses extrémités.

Le couplage mécanique entre les différentes roues pourrait aussi être obtenu par simple friction.

Ici, du fait que le dispositif d'impression est entraîné par le moteur indépendant 14, celui-ci peut être commandé pour entraîner la bande de papier 13 dans le sens contraire du sens normal pendant la coupe par les lames 21 et 22, afin de faciliter l'opération de coupe.

Si une telle caractéristique n'est pas utile, par exemple parce que la configuration des lames 21 et 22 ne la rend pas nécessaire, il est évidemment possible de transformer l'appareil qui vient d'être décrit afin que le dispositif d'impression et le dispositif de coupe soient entraînés par un unique moteur, le dispositif d'analyse étant dans ce cas entraîné par un moteur indépendant.

## Revendications

1. Appareil de bureau comprenant un dispositif de traitement (3) de documents, entraînable pour déplacer l'un par rapport à l'autre un document traité (33) et une tête de traitement (31), et un dispositif de coupe (2), entraînable pour couper des documents dans une bande de papier (13), un unique moteur (5) étant prévu pour l'entraînement du dispositif de traitement (3) et du dispositif de coupe (2), avec des moyens d'aiguillage (51, 52, 53), commandables par le sens de rotation du moteur (5), pour transmettre la force motrice du moteur (5) soit vers le dispositif de traitement (3) soit vers le dispositif de coupe (2), caractérisé par le fait que lesdits moyens d'aiguillage comprennent une roue (53) montée sur un bras (52) qui pivote librement autour de l'arbre de sortie dudit moteur (5), ladite roue (53) étant entraînée en rotation par ledit arbre de sortie et coopérant soit avec une roue (35) d'entraînement du dispositif de traitement (3), soit avec une roue (25) d'entraînement du dispositif de coupe (2).

2. Appareil de bureau selon la revendication 1, pour émettre et recevoir des télécopies, dans lequel le dispositif de traitement est le dispositif d'analyse (3) des documents à émettre et le dispositif de coupe (2) coupe les documents reçus.

## Patentansprüche

1. Bürogerät, umfassend eine Vorrichtung zur Verarbeitung (3) von Dokumenten, die angetrieben werden kann, um ein verarbeitetes Dokument (33) und einen Verarbeitungskopf (31) im Verhältnis zueinander zu verschieben, und eine Schneidvorrichtung (2), die angetrieben werden kann, um einen Papierstreifen (13) in Dokumente zu zerschneiden, einen einzigen Motor (5), der für den Antrieb der Verarbeitungsvorrichtung (3) und der Schneidvorrichtung (2) vorgesehen ist, mit Mitteln zur Weichenstellung (51, 52, 53), die durch die Drehrichtung des Motors (5) steuerbar sind, um die Triebkraft des Motors (5) entweder auf die Verarbeitungsvorrichtung (3) oder auf die Schneidvorrichtung (2) zu übertragen, dadurch gekennzeichnet, daß die Mittel zur Weichenstellung ein Rad (53) umfassen, das an einem Arm (52) angebracht ist, der frei um die Abtriebswelle des Motors (5) schwenkt, wobei das Rad (53) von dieser Abtriebswelle zur Drehung angetrieben wird und entweder mit einem Antriebsrad (35) der Verarbeitungsvorrichtung (3) oder mit einem Antriebsrad (25) der Schneidvorrichtung (2) zusammenwirkt.

2. Bürogerät nach Anspruch 1 zum Senden und Empfangen von Fernkopien, bei dem die Verarbeitungsvorrichtung die Vorrichtung zur Analyse (3) von abzusendenden Dokumenten ist und die Schneidvorrichtung (2) die empfangenen Dokumente zerschneidet.

## Claims

1. Office apparatus comprising a device (3) for processing documents, which can be driven in order to displace a processed document (33) and a processing head (31) with respect to each other, and a cutting device (2) which can be driven in order to cut documents from a roll of paper (13), a single motor (5) being provided to drive the processing device (3) and the cutting device (2), with switching means (51, 52, 53), which can be controlled by the rotational direction of the motor (5), to transmit the driving force of the motor (5) either towards the processing device (3) or towards the cutting device (2), characterised in that the said switching means comprise a wheel (53) mounted on an arm (52) which pivots freely about the output shaft of the said motor (5), the said wheel (53) being rotationally driven by the said output shaft and cooperating either with a wheel (35) for driving the processing device (3) or with a wheel (25) for driving the cutting device (2).

2. Office apparatus according to claim 1, for transmitting and receiving telecopies, in which the processing device is the device (3) for scanning the documents to be transmitted and the cutting device (2) cuts the received documents.
